# EUROPÄISCHE PATENTSCHRIFT

(11) **EP 1 163 815 B1**
(45) Veröffentlichungstag und Bekanntmachung des Hinweises auf die Patenterteilung: **07.05.2008**
(21) Anmeldenummer: 00918689.1
(22) Anmeldetag: 06.03.2000
(51) Int. Cl.: H04Q 7/36, H04Q 7/30

(54) **VERFAHREN ZUR RESSOURCENZUTEILUNG IN EINEM FUNK-KOMMUNIKATIONSSYSTEM**
METHOD FOR ALLOCATING RESOURCES IN A RADIO COMMUNICATIONS SYSTEM
PROCEDE DE PARTAGE DES RESSOURCES DANS UN SYSTEME DE RADIOTELECOMMUNICATION

(30) Priorität: 05.03.1999 DE 19909779
(43) Veröffentlichungstag der Anmeldung: 19.12.2001
(73) Patentinhaber: SIEMENS AKTIENGESELLSCHAFT, 80333 München (DE)
(72) Erfinder: SOMMER, Volker, D-13503 Berlin (DE); KÖHN, Reinhard, D-14197 Berlin (DE)
(86) Internationale Anmeldenummer: PCT/DE2000/000694
(87) Internationale Veröffentlichungsnummer: WO 2000/054531

(56) Entgegenhaltungen:
- EP-A- 0 877 512
- WO-A-98/08353
- DE-A- 4 307 966
- US-A- 5 481 533
- US-A- 5 734 699

## Beschreibung

Die Erfindung betrifft ein Verfahren zur Ressourcenzuteilung in einem Funk-Kommunikationssystem und ein derartig ausgebildetes Funk-Kommunikationssystem.

In der WO 98/08353 A2 ist ein Mobilfunksystem beschrieben, bei dem jeweils mehrere Basisstationen, die jeweils eine Funkzelle bilden, einem Basisstationscontroller zugeordnet sind. Basisstationen im Grenzbereich zwischen den Gebieten zweier Basisstationscontroller können wahlweise von jedem dieser Controller gesteuert werden.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können.

Funk-Kommunikationssysteme sind meist zellular ausgelegt, um mobilen Teilnehmern den Zugang in verschiedenen Versorgungsgebieten, die als Funkzellen bezeichnet werden, zu ermöglichen. Bei Funk-Kommunikationssystemen steht aufgrund der im Vergleich zum Festnetz relativ schmalbandigen Funkschnittstelle in jeder Funkzelle nur eine begrenzte Anzahl von Ressourcen zur Verfügung, die sich je nach gewähltem Multiplexverfahren in der Frequenz, ihrer Zeitlage sowie beim Codemultiplex in ihrer Signalform unterscheiden können, und jeweils eine bestimmte Übertragungsrate zur Verfügung stellen.

Die maximale Übertragungskapazität in einer Funkzelle ist dann erreicht, falls entweder keine freien Ressourcen mehr verfügbar sind (Hard Blocking) oder aber falls bei nicht vollständig orthogonalen Systemen die Gesamtinterferenz eine bestimmte Schwelle überschreitet (Soft Blocking).

Um die zur Verfügung stehenden Ressourcen möglichst optimal zu nutzen, sollten die verfügbaren Ressourcen zwischen den Teilnehmerstationen dynamisch umgeschaltet werden, je nach den temporären Kapazitätsanforderungen sämtlicher Dienste der einzelnen Teilnehmerstationen. Hierzu müssen in jeder Funkzelle die verfügbaren Ressourcen und deren Zuordnung zu bestimmten Verbindungen verwaltet werden.

Zusätzlich ist in zellularen Funk-Kommunikationssystemen eine Interaktion zwischen benachbarten Basisstationen (NodeB) bzw. Basisstationscontrollern (RNC) erforderlich, um eine Mehrfachzuteilung von Ressourcen und damit unnötige Interferenz auszuschließen. Dadurch entsteht erheblicher Signalisierungsaufwand im Funk-Kommunikationssystem.

Nach der bisherigen UTRAN-Systemarchitektur (Universal Telecommunications Radio Access Network), siehe dazu Tdoc SMG2 512/98, ETSI STC SMG2 #28, Dresden, 16. November 1998, wird das Problem dadurch gelöst bzw. umgangen, daß die mögliche Dynamik bei der Ressourcen-Zuteilung bewußt eingeschränkt wird. Dazu werden jeder Verbindung vom Basisstationscontroller soviele dedizierte Kanäle (dedicated Channels DCH) exklusiv zugeordnet, wie für die Übertragung des Spitzenwertes der Datenrate von Echtzeit-Diensten (Real-Time RT) erforderlich ist.

Falls aufgrund variabler Datenraten die zugeteilte RT-Kapazität in bestimmten Perioden nicht vollständig benötigt wird, besteht zwar die Möglichkeit, zusätzlich Pakete von Diensten zu übertragen, die keine Echtzeitdienste sind (Non-Real-Time- bzw. NRT-Dienste). Eine Übertragung von Daten anderer Teilnehmerstationen ist allerdings nicht möglich. Die Zuteilung (Scheduling) der Ressourcen der Dienste auf die DCH einer Teilnehmerstation wird von einer Instanz der Ressourcenkontrolle, des sogenannten dedicated Medium Access Control (MAC-d), individuell für jede Teilnehmerstation durchgeführt. Eine direkte Interaktion zwischen verschiedenen MAC-d Instanzen ist nicht vorgesehen.

Darüberhinaus besteht die Möglichkeit, NRT-Dienste in einem gemeinsamen Kanal in Abwärtsrichtung (Downlink Shared Channel DSCH) zu übertragen. Dies sind von einer gemeinsamen Instanz des Shared MAC (MAC-sh) verwaltete Ressourcen in jeder Zelle, die temporär für bestimmte Rahmenperioden verschiedenen Teilnehmerstationen zugeordnet werden können. Der MAC-sh wird zellspezifisch eingerichtet, eine direkte Interaktion von verschiedenen MAC-sh Instanzen ist nicht vorgesehen.

Die logische Trennung von DCH und DSCH führt aufgrund der Beteiligung mehrerer MAC-Instanzen, die im Allgemeinen räumlich voneinander getrennt in verschiedenen Basisstationscontrollern liegen und deshalb nur mit erheblichem Signalisierungsaufwand miteinander kommunizieren können, zu folgenden Nachteilen:

Während bei einer ausschließlichen Übertragung via DCH sämtliche Codes bei einer CDMA-Funkübertragung (CDMA code division multiple access) durch adaptive Datenkomprimierung optimal genutzt werden können, geht dieser Vorteil bei Belegung des DSCH zum Teil verloren, da einzelne Dienste nicht mit vertretbarem Aufwand auf DCH und DSCH aufgeteilt werden können und ein Ratenanpassungsverfahren für DCH und DSCH getrennt ausgeführt wird. Deshalb wird i.A. insgesamt mehr Übertragungskapazität (d.h. mehr Ressourcen) für eine Teilnehmerstation benötigt als es beim Multiplexen sämtlicher Dienste in einen Datenstrom möglich wäre.

Da der DSCH für eine effektive Nutzung eine hohe Übertragungskapazität aufweisen muß und deshalb viele Ressourcen exklusiv für ihn reserviert werden, diese jedoch ausschließlich zur Übertragung von NRT-Diensten geeignet ist, kann dies eine Zulassung neuer Verbindungen für RT-Dienste verhindern (Hardblocking).

Aufgrund der notwendigen DCH-Zuteilung entsprechend der Maximal-Datenrate für sämtliche RT-Dienste einer Teilnehmerstation kann ein Hardblocking auftreten, obwohl bei variablen Datenraten viele belegte Ressourcen nicht ständig zur Übertragung benötigt werden.

Die Signalisierung einer Datenübertragung im DSCH für eine bestimmte Teilnehmerstation mittels des TFCI-Parameters (TFCI Transport Format Combination Indicator) im zugeordneten DCH ist umständlich und verringert darüberhinaus die im TFCI übertragbare mögliche Anzahl von Transportformatkombinationen (TFC Transport Format Combination), da explizit TFCI-Bits für den DSCH reserviert werden müssen.

Das Leistungsmerkmal Soft Handover, das die Zuverlässigkeit einer Übertragung deutlich erhöht und bei WCDMA-Systemen (wideband CDMA) eine Verringerung der Gesamtinterferenz bewirken kann, ist mit dem derzeitigen DSCH-Konzept nicht verfügbar. Beim Soft Handover wird eine Teilnehmerstation zeitweilig von zumindest zwei Basisstationen versorgt.

Durch das Zusammenwirken der genannten Faktoren kann bei der Übertragung von Diensten mit variablen Datenraten die mögliche Kapazität der Funkschnittstelle nur begrenzt genutzt werden.

Der Erfindung liegt daher die Aufgabe zugrunde, das Funkressourcen-Management in Funk-Kommunikationssystemen zu verbessern. Diese Aufgabe wird durch das Verfahren mit den Merkmalen des Anspruchs 1 und das Funk-Kommunikationssystem mit den Merkmalen des Anspruchs 14 gelöst. Vorteilhafte Weiterbildungen sind den Unteransprüchen zu entnehmen.

Die Ressourcen werden in Folge als Kanäle bezeichnet, wobei ein Kanal je nach dem gewählten Multiplex-Verfahren durch ein Frequenzband und/oder einen Zeitschlitz und/oder einen Code und/oder anderen Separierungsmöglichkeiten bezeichnet wird.

In einem Funk-Kommunikationssystem werden üblicherweise mehrere Basisstationen bezüglich der Ressourcenzuteilung von jeweils einem Basisstationscontroller gesteuert. Durch eine Basisstation wird jedoch nur eine begrenzte Anzahl von Kanälen zur Verfügung gestellt, die zu Verbindungen von und zu unterschiedlichen Teilnehmerstationen zuordenbar sind. -

Erfindungsgemäß wird ein Teil der von der Basisstationen bereitstellbaren Kanäle der ausschließlichen Kontrolle des zugeordneten Basisstationscontrollers entzogen, mit der Absicht diese von einem zweiten Basisstationscontroller ohne weitere Zustimmung des Basisstationscontrollers dynamisch belegen zu können. Die Anzahl der Kanäle des Teils ist unter Mitwirkung des zweiten Basisstationscontroller veränderbar. Die Reservierung von Kanälen für den zweiten Basisstationscontroller senkt den Signalisierungsaufwand. Die Veränderung des Teils der Kanäle, die der ausschließlichen Kontrolle des zugeordneten Basisstationscontrollers entzogen sind, erfolgt nicht rahmenweise sondern nur bei Bedarf, d.h. in der Regel in größeren zeitlichen Abständen.

Damit wird die bisherige teilnehmerbezogene Reservierung von Ressourcen in Nachbarzellen durch den Basisstationscontroller durch eine Ressourcen-Reservierung ersetzt, die auf den von den jeweiligen Nachbar-Basisstationscontrollern (RNC) kontrollierten Bereich (RNS - Radio Network Subsystem) bezogen ist. Die direkte Kontrolle über einen bestimmten Anteil der Übertragungskapazität in den eigenen Zellen wird an den Nachbar-RNC übertragen. Durch diesen Ansatz wird die Voraussetzung dafür geschaffen, daß die MAC-d Instanzen in jedem RNC dynamisch die von ihnen kontrollierten Ressourcen verwalten können. Es kann damit sowohl das Leistungsmerkmal Soft Combining unterstützt werden, als auch bei nicht orthogonaler Ressourcen-Zuteilung die Interferenz zwischen Zellen, die zu unterschiedlichen RNS-Bereichen gehören, vermieden werden.

Durch das erfindungsgemäße Verfahren wird auch vermieden, daß vor Zuteilung einer Ressource immer eine zeitaufwendige Anfrage bei den Nachbar-RNC erfolgen muß. Diese Reservierung von Ressourcen in Nachbarzellen ist sowohl sinnvoll, um bei W-CDMA in Abwärtsrichtung Soft Handover zu ermöglichen, als auch, um bei TD-CDMA (time division CDMA) unerwünschte Interferenzen zwischen den Funkzellen zu vermeiden.

Nach einer vorteilhaften Ausgestaltung der Erfindung wird die Anzahl der dem zweiten RNC zugewiesenen Kanäle zyklisch dem Verkehrsaufkommen angepaßt. Die geschieht durch Signalisierung zwischen den RNC. Dieser Signalisierungsaufwand ist wesentlich geringer als bei einer fortlaufenden teilnehmerbezogenen Ressourcenaufteilung zwischen den RNS-Bereichen. Die Kapazitätsaufteilung wird damit optimiert und das Risiko des Hardblockings durch Signalisierung und vorausschauende Reservierung zwischen den beteiligten RNC gering gehalten.

Nach einer weiteren Ausgestaltung der Erfindung nimmt der RNC eine teilnehmerbezogene Zuteilung der Kanäle vor, wobei ein Kanal auch mehreren Teilnehmerstationen zugeteilt sein kann. Für jede Teilnehmerstation wird ggf. nur eine Instanz im RNC eingerichtet. Die logische Trennung zwischen DCH and DSCH in der Schicht des MAC wird aufgehoben. Es gibt nur noch für jede Teilnehmerstation eine dedizierte (dedicated) MAC-Instanz im RNC, die auf sämtliche Ressourcen zugreifen kann, welche für die Datenübertragung der entsprechenden Teilnehmerstation vom RNC freigegeben wurden. Jede Ressource kann grundsätzlich mehreren Teilnehmerstationen zugeordnet werden, um bei Diensten mit variablen Datenraten ungenutzte Ressourcen zu vermeiden.

Die Zuteilung der Kanäle wird vorteilhafterweise von Zeitschlitz zu Zeitschlitz dynamisch angepaßt. Es handelt sich beim erfindungsgemäßen Verfahren somit um eine vollständig dynamische Zuteilung von Ressourcen, die ohne den sonst hohen Signalisierungsaufwand auskommt. Die Umschaltung eines Kanals zwischen verschiedenen Teilnehmerstationen muß aufgrund der im allgemeinen dynamisch wechselnden Datenraten sehr schnell nach jedem Übertragungsrahmen erfolgen können (bei UTRAN ca. alle 10 ms), um ungenutzte Ressourcen zu vermeiden und dadurch die spektrale Effizienz zu maximieren.

Eine weitere Ausgestaltung sieht vor, daß im RNC die teilnehmerbezogenen Instanzen der einzelnen Teilnehmerstationen wechselwirken. Somit wird innerhalb eines RNC der Zugriff auf die zur Verfügung stehenden Ressourcen optimiert. Dazu kommunizieren die teilnehmerbezogenen MAC-d Instanzen über zellbezogene Tabellen, in denen die Zuordnung der verfügbaren Ressourcen zu den sich in der Funkzelle aufhaltenden Teilnehmerstationen ständig aktualisiert wird. Durch die Kommunikation der teilnehmerbezogenen MAC-d Instanzen werden Mehrfachbelegungen vermieden.

Durch die Vergabe von Prioritäten für die einzelnen Teilnehmerstationen bei der Belegung von Ressourcen wird die Möglichkeit geschaffen, Dienstgüten für RT-Dienste zu garantieren und dennoch sämtliche Ressourcen optimal zu nutzen. Bei gleicher Priorität entscheidet eine dynamische Priorisierung aufgrund der Übertragungssituation oder die zeitliche Reihenfolge einer Ressourcenanforderung über die Nutzung des Kanals.

Zur Ressourcenverwaltung werden vorteilhafterweise Ressourcentabellen (Shared Channel Table SCT) angelegt, die für alle Kanäle angeben, welchen Teilnehmerstationen mit welcher Priorität der Kanal zugeteilt wird und welche Teilnehmerstation den Kanal aktuell nutzt. Im RNC wird für jede Zelle, in der sich Teilnehmerstationen aufhalten und die vom RNC verwaltet werden, eine Tabelle angelegt. Diese Tabelle verwaltet jeweils die Ressourcen einer Funkzelle, die von demjenigen RNC kontrolliert werden. Die Tabelle stellt sicher, daß keine dieser Ressourcen gleichzeitig von mehreren MAC-d Instanzen belegt wird. Die Einträge der Tabelle werden bezüglich der Belegung dynamisch angepaßt. Während einer bestehenden Verbindung erfolgt die dynamische Ressourcenzuteilung derart, daß jede MAC-d Instanz abhängig von der aktuell für ihre Teilnehmerstation zu übertragenden Datenmenge entsprechende Ressourcen bei den SCT derjenigen Funkzellen anfordert, die an der Verbindung beteiligt sind (ohne Soft Handover immer nur eine Funkzelle).

Es ergibt sich damit auch die Möglichkeit, bei einem TDMAbasierten Übertragungsverfahren (time division multiple access) innerhalb des Versorgungsbereiches eines RNC den unterschiedlichen Basisstationen möglichst orthogonale Resourcen zuzuordnen. Damit wird die Interferenz zwischen den Funkzellen minimiert.

In jedem RNC wird durch statistische Auswertung der SCT-Belegung die noch nutzbare freie Kapazität jeder Ressource ermittelt. Diese dient dazu, um bei der Einrichtung von neuen Verbindungen möglichst optimal eine bestimmte Untermenge der vorhandenen Ressourcen mit entsprechenden Prioritäten den neuen Teilnehmerstationen zuzuordnen, und hieraus in Kombination mit den Datenraten der zu übertragenden Dienste die erforderlichen Transportformatkombinationen zu bestimmen.

Wird für eine Teilnehmerstation eine Übergabe (Handover) zu einer Funkzelle erforderlich, auf deren Ressourcen der für die Teilnehmerstation zuständige RNC (SRNC) nicht zugreifen kann, da keine ausreichende Reservierung erfolgte und erfolgen kann, so wird eine Verlagerung der SRNC-Funktionalität durchgeführt (SRNC-Relocation).

Ein Ausführungsbeispiel der Erfindung wird anhand der beiliegenden Zeichnungen näher erläutert.

Dabei zeigen
- Fig 1: ein Funk-Kommunikationssystem,
- Fig 2, 3: eine zellulare Aufteilung des Funkversorgungsgebietes in unterschiedliche RNS-Bereiche bei W-CDMA bzw. TD-CDMA,
- Fig 4: die Kanalzuteilung bei Soft Handover bei W-CDMA,
- Fig 5, 6: eine Kanalzuteilung bei W-CDMA bzw. TD-CDMA,
- Fig 7: die Nutzung einer Tabelle zur Kanalzuteilung im RNC, und
- Fig 8, 9: eine Signalisierung bei einem Inter-RNC Soft Handover.

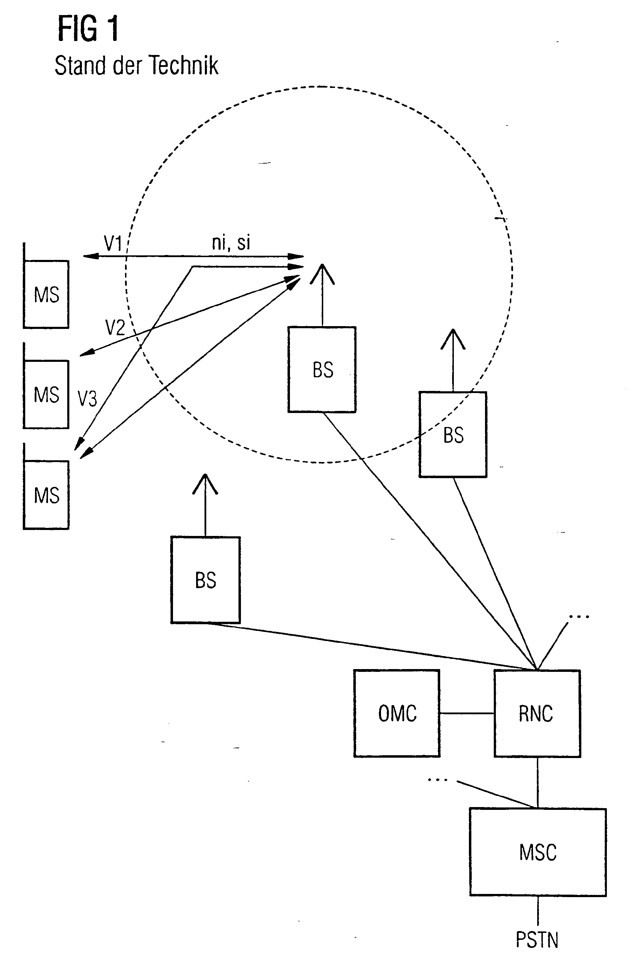

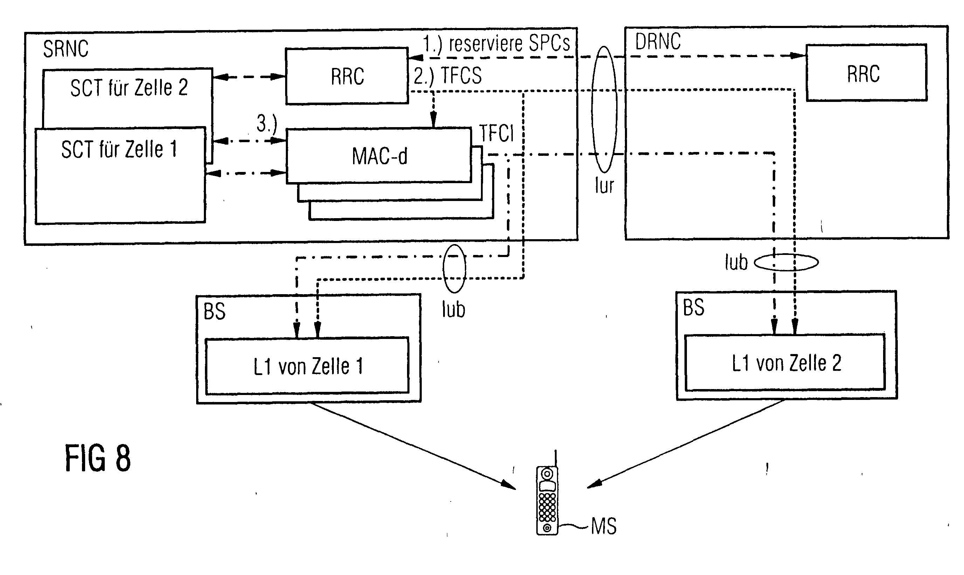

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller RNC zur Steuerung der Basisstationen BS und zum Zuteilen von funktechnischen Ressourcen verbunden. Jede dieser Basisstationscontroller RNC ermöglicht wiederum eine Verbindung zu zumindest einer Basisstation BS. Die Basisstationscontroller RNC können jedoch auch untereinander gemäß Fig 8 vernetzt sein.

Eine Basisstation BS kann über eine Funkschnittstelle eine Verbindung zu einer Teilnehmerstation, z.B. Mobilstationen MS oder anderweitigen mobilen und stationären Endgeräten, aufbauen. Durch jede Basisstation BS wird zumindest eine Funkzelle gebildet.

In FIG 1 sind beispielhaft Verbindungen V1, V2, V3 zur Übertragung von Nutzinformationen ni und Signalisierungsinformationen si als Punkt-zu-Punkt-Verbindungen zwischen Teilnehmerstationen MS und einer Basisstation BS dargestellt.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß und für im unlizensierten Frequenzbereich betriebene Basisstationen und Teilnehmerstationen.

Im weiteren wird die Erfindung anhand von zwei unterschiedlichen Funkschnittstellen erläutert und zwar für eine W-CDMA Funkschnittstelle im FDD-Modus (frequency division duplex) und für eine TD-CDMA Funkschnittstelle im TDD-Modus (time division duplex). Weitere Einzelheiten für Funk-Kommunikationssysteme mit derartigen Funkschnittstellen sind beispielsweise DE 198 35 643 und DE 198 20 736 zu entnehmen.

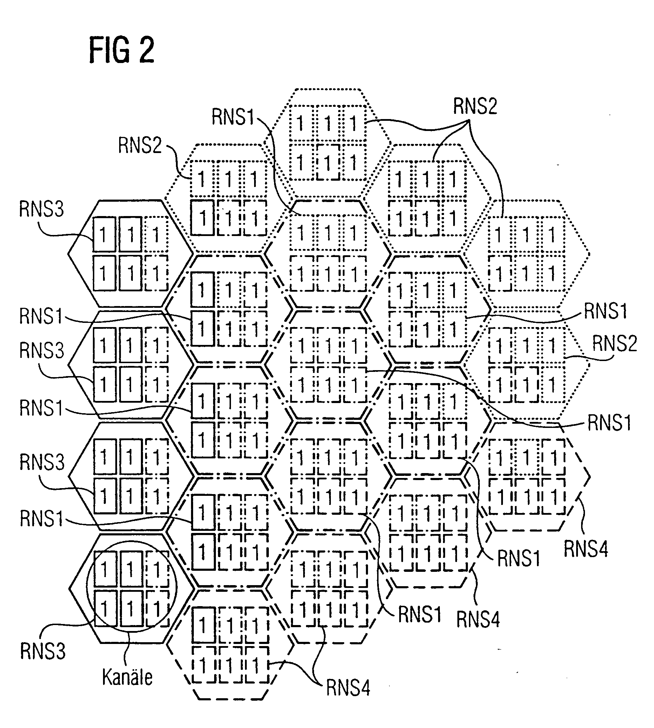

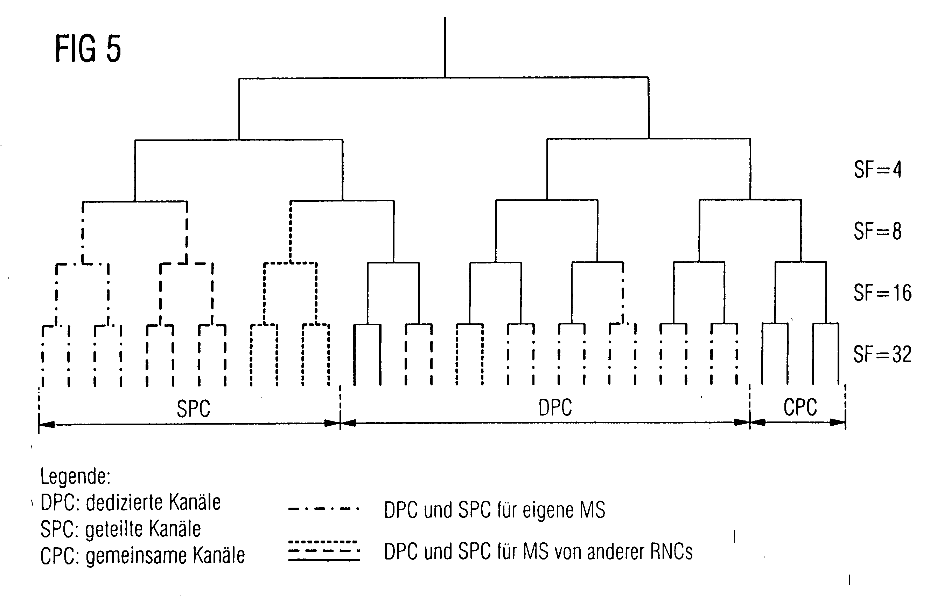

In Fig 2 ist gezeigt, daß ein zellulares Funk-Kommunikationssystem mit W-CDMA Funkschnittstelle eine Vielzahl von Funkzellen umfaßt. Eine Funkzelle wird dabei von einer Basisstation BS versorgt, wobei die Funkzellen von mehreren Basisstationen BS einen Bereich RNS (Radio Network Subsystem) bilden, der von jeweils einem Basisstationscontroller RNC kontrolliert wird. In jeder der Funkzellen stehen beispielhaft sechs Kanäle als funktechnische Ressourcen zur Versorgung der Teilnehmerstationen MS bereit. Die Kanäle werden durch einen Spreizkode, siehe Fig 5, und ein Frequenzband (Bandbreite 5 MHz) gebildet. In jeder Funkzelle ist ein Teil der Kanäle für eine Zuteilung durch den eigenen Basisstationscontroller RNC vorgesehen, weitere Teile der Kanäle sind jedoch für benachbarte Bereiche RNS reserviert und können von den dort zuständigen Basisstationscontrollern RNC zugeteilt werden.

In der Mitte eines Bereiches, z.B. RNS1, können auch alle Kanäle zur eigenen Verfügung stehen, ohne daß Reservierungen für benachbarte RNS vorliegen. Die Anzahl der reservierten Kanäle, d.h. die Übertragungskapazität, die zur Verwaltung von benachbarten Basisstationscontrollern RNC reserviert wurde, kann in den einzelnen Funkzellen variabel und entsprechend dem Bedarf eingestellt werden. Dazu gibt es einen Signalisierungsaustausch zwischen den Basisstationscontrollern RNC. Somit wird dem wechselnden Verkehrsaufkommen entsprochen. Der Signalisierungsaufwand ist jedoch wesentlich geringer als bei einer teilnehmerbezogenen Reservierung.

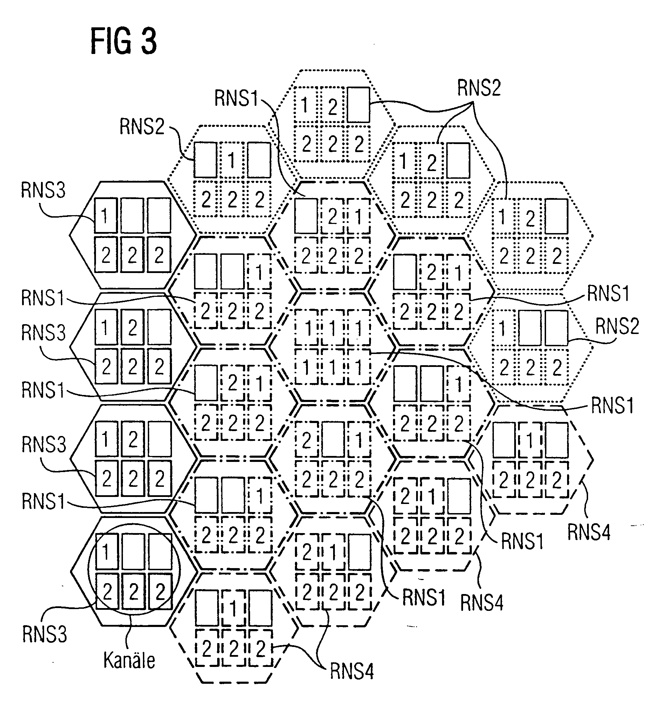

Auch bei einem Funk-Kommunikationssystem mit TD-CDMA Funkschnittstelle nach Fig 3 wird eine Unterteilung der Kanäle einer Funkzelle vorgenommen. Ein Teil der Kanäle kann von dem Basisstationscontroller RNC der Funkzelle unbeschränkt vergeben werden, ein anderer Teil unterliegt Beschränkungen bei der Zuteilung, um die Interferenz für Nachbarzellen zu begrenzen. Die Beschränkung tritt insbesondere an den Rändern eines RNS-Bereiches auf, da der RNC keine Informationen über die Kanalzuteilung im Nachbar-RNS hat.

Ein weiterer Teil ist einem benachbarten RNS zugeteilt. Auch hierbei sind die Kanäle teilweise der ausschließlichen Kontrolle des Basisstationscontrollers RNC, der die Basisstation BS der Funkzelle steuert, entzogen. Ein Teil der Kanäle kann nur durch Basisstationscontroller RNC von Nachbarzellen oder nach Interferenz-Messungen in den Kanälen vergeben werden. Die Kapazitätsverteilung auf beschränkte, unbeschränkte, keine Nutzung (somit Nutzung der Nachbarzellen) ist in Abhängigkeit von der aktuellen Verkehrslast änderbar.

In benachbarten RNS können auch gleiche Kanäle zur beschränkten Benutzung reserviert werden. Anhand einer Interferenzmeßung, die von den Basisstationen BS oder auch unter Zuhilfenahme von Messungen der Teilnehmerstationen MS durchgeführt werden, wird festgestellt, ob der Kanal bereits benutzt wird oder zu stark gestört ist. Ist dies nicht der Fall, so vergibt der Basisstationscontroller RNC den Kanal ohne Rücksprache mit anderen RNCs. Solche Kanäle werden bevorzugt für NRT-Dienste benutzt, bei denen durch wiederholtes Aussenden oder andere Maßnahmen auch bei zeitweilig gestörtem Empfang eine ausreichende Dienstqualität garantiert werden kann.

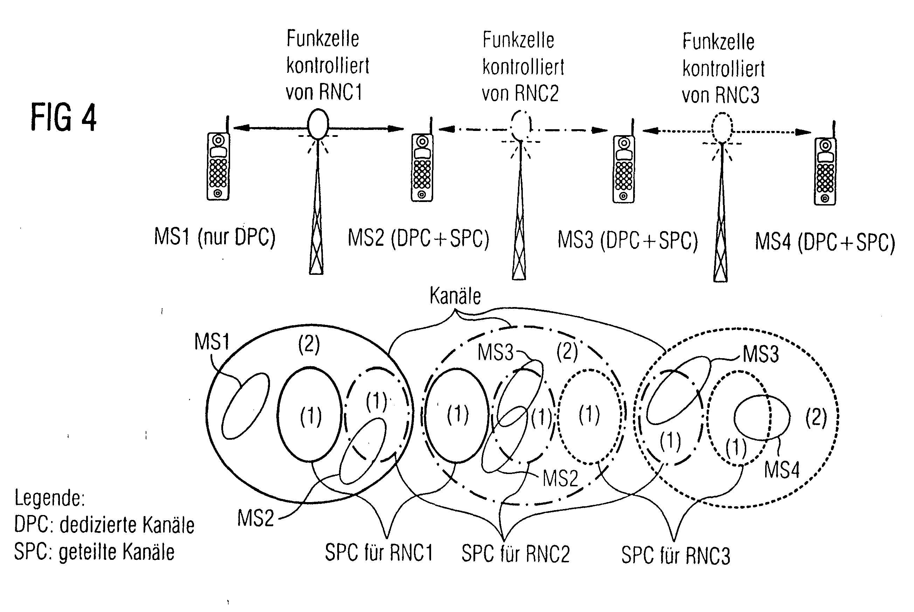

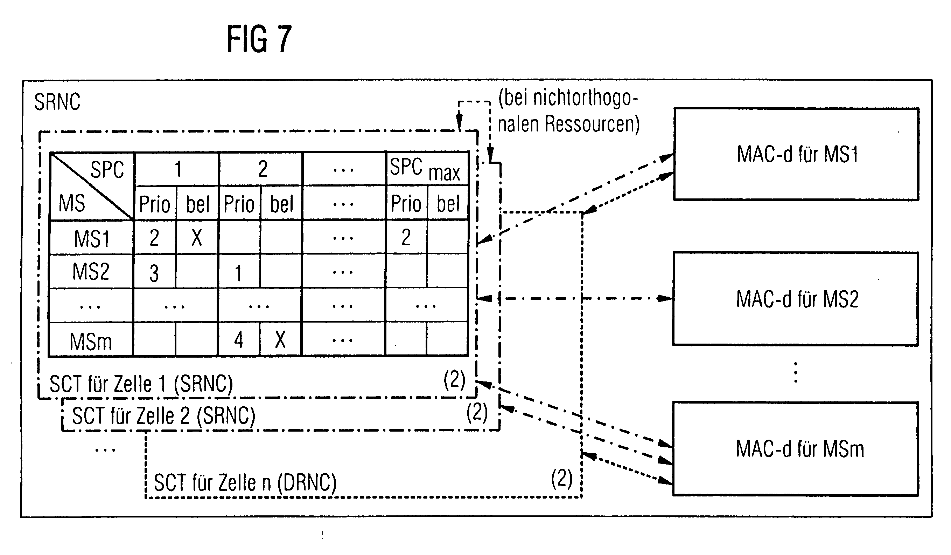

In Fig 4 ist die Nutzung von Kanälen durch Teilnehmerstationen MS1 bis MS4 gezeigt, die sich im Versorgungsbereich unterschiedlichen Basisstationen BS aufhalten, wobei die Basisstationen BS von unterschiedlichen Basisstationscontrollern RNC gesteuert werden. Ein Teil der Kanäle eines von einem RNC1 bis RNC3 kontrollierten RNS ist jeweils für den- oder die benachbarten RNC reserviert. Nach Fig 4 wird eine Unterteilung der Kanäle in dedizierte und geteilte Kanäle DPC, SPC vorgenommen. Die dedizierten Kanäle DPC sind jeweils einer Teilnehmerstation MS exklusiv zugeteilt, währenddessen die geteilten Kanäle SPC abwechselnd von unterschiedlichen Teilnehmerstationen MS genutzt werden können. Damit kann dem unterschiedlichen Charakter der Dienste und den variablen Datenraten besser entsprochen werden. Eine Teilnehmerstation MS kann dabei gleichzeitig dedizierte und geteilte Kanäle DPC, SPC nutzen und nur eine Art der Kanäle DPC, SPC (siehe auch Fig 7).

Befindet sich eine Teilnehmerstation, z.B. MS2 oder MS3, im Grenzbereich eines Bereiches RNS eines Basisstationscontrollers RNC, so kann mit Hilfe des Soft Handovers eine reibungslose Übergabe erfolgen, indem gleichzeitig eine Versorgung von unterschiedlichen Basisstationen BS gewährleistet ist. In diesem Fall erfolgt die Versorgung der Teilnehmerstation MS2, MS3 von Basisstationen BS unterschiedlicher RNS. Die vorherige Reservierung von Teilen der Kanäle für benachbarte RNC hilft mit geringem Signalisierungsaufwand diese Doppelversorgung zu gewährleisten.

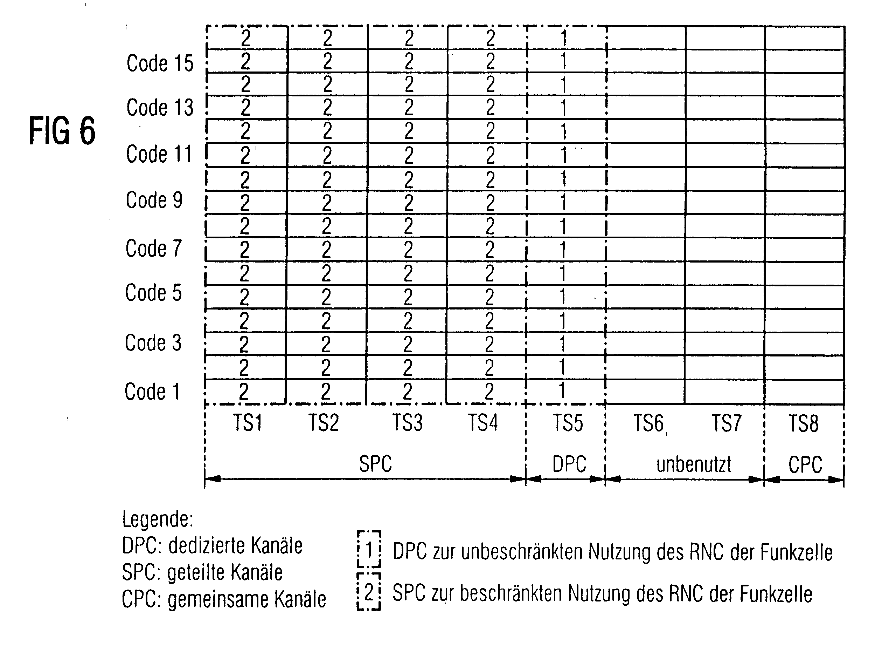

Anhand der Fig 5 und 6 soll die Beschaffenheit der Kanäle bei W-CDMA bzw. TD-CDMA Funk-Schnittstellen verdeutlicht werden. In beiden Fällen wird von einem breitbandigen Frequenzband ausgegangen, in dem weitere Multiplex-Verfahren zur Teilnehmerseparierung einsetzbar sind.

Nach Fig 5 können von einem Codebaum, der entsprechend DE 198 35 643 gebildet wird, Codes mit unterschiedlichen Spreizfaktoren SF abgeleitet werden. Diese Codes können auf dedizierte, geteilte und gemeinsame Kanäle DPC, SPC, CPC aufgeteilt werden. Je geringer der Spreizfaktor SF ist, um so größer ist die Datenrate des Kanals. Die gemeinsamen Kanäle CPC enthalten Kontrollinformationen (entsprechend BCCH, FACH, PCH), die an mehrere Teilnehmerstationen MS im Sinne einer Punkt-zu-Multipunkt-Verbindung gerichtet sind.

### Nach Fig 6 ist die Kanalaufteilung für TD-CDMA wie folgt:

Ein Rahmen wird beispielsweise in acht Zeitschlitze TS aufgeteilt, wobei in jedem Zeitschlitz TS1 bis TS8 16 Kanäle anhand ihres Codes 1 bis 16 separierbar sind. Auch bei TD-CDMA kann in dedizierte, geteilte und gemeinsame Kanäle DPC, SPC und CPC unterschieden werden, wobei die Kanäle beispielsweise anhand der Zeitschlitze gruppiert werden. Ein weiterer Teil der Zeitschlitze bleibt ungenutzt, da er exklusiv einem benachbarten Basisstationscontroller RNC zur Zuteilung zugewiesen wurde. Sowohl innerhalb der DPC als auch der SPC kann in Kanäle zur unbeschränkten und Kanäle zur beschränkten Nutzung unterschieden werden. Der Unterschied besteht darin, daß bei den Kanälen zur beschränkten Nutzung eine Zuteilung erst erfolgt, nachdem der Kanal überprüft wurde. Dazu findet das bereits beschriebene Ausmessen des Kanals statt. Falls die Interferenzsituation es zuläßt, kann der Kanal dann vom RNC der Funkzelle zugewiesen werden.

In Fig 7 ist ein Basisstationscontröller RNC gezeigt, über den die Verbindungen zu Teilnehmerstationen MS1, MS2 bis MSm aufgebaut wurden. Dieser Basisstationscontroller SRNC wird als serving RNC oder auch Anker-RNC bezeichnet, da dieser während der Dauer einer Verbindung gegenüber den übrigen Netzeinrichtungen (MSC etc.) für diese Verbinungen verantwortlich bleibt. Bewegt sich eine Teilnehmerstation MS1 oder MSm während der Verbindung in den kontrollierten Bereich einer anderen RNC in dem ihr Kanäle reserviert sind, die als drift RNC (DRNC) bezeichnet wird, so kann SNRC aus dem reservierten Bereich Kanäle zuteilen, indem die für die neue Zelle zuständige SCT von der für die Teilnehmerstation MS zuständige MAC-d Instanz abgefragt wird.

Beim TDD-Übertragungsverfahren, als Beispiel für nichtorthogonale Ressourcen in Nachbarzellen, ergibt sich zusätzlich ein Abstimmungsaufwand zwischen den Kanalzuteilungen der einzelnen Funkzellen des eigenen RNS-Bereiches, wenn benachbarte Funkzellen im gleichen Frequenzband entsprechend einer Zeitgruppierung betrieben werden.

Für jede Teilnehmerstation MS wird eine Instanz MAC-d im Sinne eines Prozesses im SRNC aufgebaut, die während der Dauer der Verbindung die funktechnischen Ressourcen für diese Teilnehmerstation MS anfordert. Um der Teilnehmerstation MS Kanäle zuzuteilen, wird auf die Tabelle SCT (shared channel table) zugegriffen, die für die in einer Funkzelle verfügbaren Kanäle angibt, welche Teilnehmerstation MS1 bis MSm welchen Kanal SPC1 bis SPCmax mit welcher Priorität belegen darf (Prio). Weiterhin gibt die Tabelle SCT an, welche Teilnehmerstation MS den Kanal aktuell nutzt (bel). Liegt kein Eintrag in einem Feld vor, dann bedeutet dies, daß dieser Kanal für die Teilnehmerstation MS nicht verfügbar ist, z.B. SPC 2 für MS1.

Die Tabellenform dient dabei nur als Verdeutlichung für eine übersichtliche Ressourcenverwaltung, wobei auf die einzelnen Einträge schnell mit Hilfe eines Zeigers zugegriffen werden kann. Andere Darstellungsformen sind ebenso möglich.

Die Prioritäten bei den Zugriffsrechten auf die Kanäle werden entsprechend der Anforderungen von RT- oder NRT-Diensten bzw. die Dienstqualität (Quality of Service) festgelegt. Dies ist eine statische Priorität, die nicht fortlaufend verändert werden muß. Die statische Priorisierung der Teilnehmerstationen MS bzw. Diensten in der Tabelle SCT kann angepaßt werden, falls sich die Dienstkombination bzw. die Dienste einer Teilnehmerstation MS ändern. Die Priorisierung erfolgt innerhalb des zuständigen RNC.

Z.B. bei Paketdiensten kann eine dynamische Priorität, die innerhalb eine Gruppe von Teilnehmerstationen MS mit gleicher statischer Priorität wirkt, weiterhin durch folgende Größen beeinflußt werden:
- Teilnehmerstationen mit einer hohen Anzahl zwischengespeicherter Datenpakete haben eine hohe Priorität,
- Datenpakete mit geringer maximal erlaubter Verzögerungszeit haben eine hohe Priorität, dabei wird ggf. die aktuelle Verzögerung bereits berücksichtigt,
- Teilnehmerstationen mit wiederholt zu sendenden Datenpaketen haben eine hohe Priorität.
Die dynamische Priorität kann von Rahmen zu Rahmen über die Kanalzuteilung entscheiden.

Ist ein Kanal mehreren Teilnehmerstationen MS zugeteilt, dann entscheidet die höchste statische Priorität bei der folgenden Vergabe des Kanals. Ist die statische Priorität für mehrere Teilnehmerstationen gleich, dann entscheidet die höhere dynamische Priorität. Ergibt sich auch daraus kein Unterschied, so bleibt die bisherige Belegung erhalten. Diese Entscheidung über die konkrete Kanalzuteilung fällt von Rahmen zu Rahmen, d.h. innerhalb von 10 ms.

Den Netzbetreibern ist durch die Priorisierung, insbesondere die statische Prioritäten, die Möglichkeit gegeben, eine Differenzierung der Dienstleistungen vorzunehmen, um für bestimmte Marktsegmente angepaßte Leistungen mit entsprechenden Preisen anzubieten.

Im Gegensatz zur teilnehmerbezogenen Vergabe von Kanälen in benachbarten RNS, die eine Kommunikation zwischen den RNC erfordern würde, kann der Signalisierungsaufwand gering gehalten werden, wenn entsprechend der Erfindung ständig Kanäle des benachbarten RNS für die RNC reserviert sind und diese darüber ohne Rückfragen verfügen kann.

In Fig 7 ist die Verwaltung nur für die geteilten Kanäle SPC gezeigt. Eine unterschiedliche Behandlung von DPC und SPC ist jedoch nicht nötig. Einheitliche Tabellen SCT können für alle Arten von Kanälen DPC, SPC eingerichtet werden. Gerade durch eine gemeinsame Verwaltung aller Ressourcen einer Funkzelle werden einige der im Stand der Technik auftretenden Nachteile bei der Nutzung von DPC und SPC behoben. Die Synchronisation der Übertragung bei der gemischten Nutzung von DPC und SPC kann DE 198 57 041 entnommen werden.

Eine Teilnehmerstation MS in Fig 8 befindet sich im Grenzbereich von zwei Funkzellen (Zelle 1 und Zelle 2). Diese zwei Funkzellen werden jedoch von zwei unterschiedlichen RNC kontrolliert. Im SRNC wurde die Verbindung ursprünglich aufgebaut, doch die Teilnehmerstation MS bewegt sich in den Bereich RNS des DRNC hinein. Die RNCs sind über eine Iur-Schnittstelle miteinander verbunden. Die beiden Funkzellen werden durch Basisstationen BS (oft auch als NodeB bezeichnet) gebildet, die mit dem jeweiligen RNC über eine Iub-Schnittstelle verbunden sind. Die Kommunikation zwischen den RNC erfolgt über Funkressourcen-Manager RRC (radio ressource control), die die Reservierung von Kanälen für benachbarte RNC aushandeln.

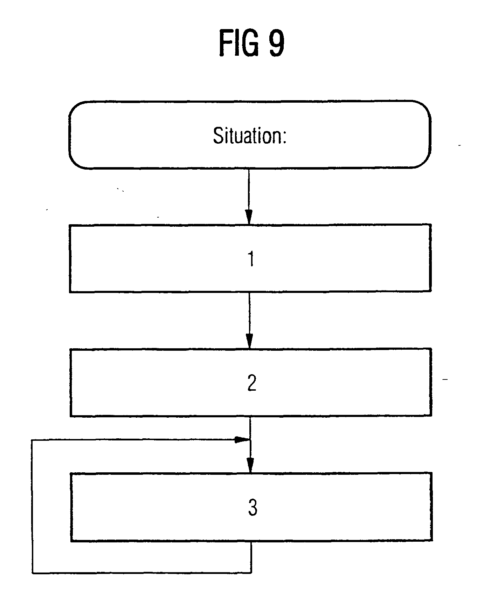

In Fig 9 wird vereinfacht ein Verfahrensablauf für ein Soft Handover entsprechend der Darstellung von Fig 8 gezeigt. Ausgehend von der Situation, daß die Teilnehmerstation MS eine Verbindung mit Zelle 1 unterhält, jedoch eine Erweiterung des aktiven Satzes der an der Verbindung beteiligten Basisstationen BS mit der Zelle 2 benötigt, werden folgende Verfahrensschritte durchgeführt.

In einen ersten Schritt (1) reserviert die Einrichtung zum Funkressourcen-Management RRC in der SRNC Übertragungskapazität in Zelle 2 für die neue Teilnehmerstation MS. Falls nicht genügend Kanäle in Zelle 2 für den SRNC verfügbar sind wird eine Erweiterung des Bereiches der reservierten Kanäle beim RRC der DRNS beantragt.

In einem zweiten Schritt (2) wählt der RRC in dem SRNC die passenden Kanäle SPC oder DPC in Zelle 2 aus und übertägt die entsprechend berechneten TFCS zu beiden Schicht-1-Instanzen und zu der MAC-d Instanz der die Teilnehmerstation MS versorgenden Basisstation BS (beide TFCS in den zwei Zellen können unterschiedlich sein).

In einem dritten Schritt erhält die MAC-d Instanz während jedes Rahmenintervalls verfügbare Kanäle SPC bzw. DPC in beiden Zellen durch Abfrage der jeweiligen SCTs und überträgt die TFCI in beide Zellen (die beiden TFCI-Parameter können unterschiedlich sein). Die Art der Signalisierung mit TFCI kann DE 198 56 834 entnommen werden.

Nach erfolgter Übergabe an die Zelle 2 - die Zelle 1 stellt der Teilnehmerstation MS keinen Kanal mehr zu Verfügung - kann auch eine Übergabe der aktuellen Ressourcenverwaltung für die Teilnehmerstation MS zu der zweiten RNC vorgenommen werden. Die DRNC wird dann zur SRNC. Eine Übergabe ist dann zwingend, wenn die bisherige DRNC keine Kanäle in Funkzellen zuteilen kann, in denen die Teilnehmerstation MS versorgt werden muß.

## Patentansprüche

1. Verfahren zur Ressourcenzuteilung in einem Funk-Kommunikationssystem, bei dem
die Ressourcen durch Kanäle der Funkschnittstelle zwischen Basisstationen (BS) und Teilnehmerstationen (MS) gebildet werden,
jeweils mehrere Basisstationen (BS) bezüglich der Ressourcenzuteilung von einem ersten und einem zweiten Basisstationscontroller (RNC) gesteuert werden, die demselben Funknetz angehören,
durch die Basisstationen (BS) jeweils eine begrenzte Anzahl von Kanälen zur Verfügung stellbar sind, die Verbindungen von oder zu unterschiedlichen Teilnehmerstationen (BS) zuordenbar sind,
**dadurch gekennzeichnet,**
**dass** ein Teil der von einer der Basisstationen (BS) zur Verfügung stellbaren Kanäle der Kontrolle des ihr zugeordneten ersten Basisstationscontrollers (RNC) entzogen und für eine Kanalzuteilung an Teilnehmerstationen durch den zweiten Basisstationscontroller reserviert wird, so dass der zweite Basisstationscontroller über diesen Teil der Kanäle ohne eine Kommunikation mit dem ersten Basisstationscontroller verfügen kann.

2. Verfahren nach Anspruch 1, **dadurch gekennzeichnet, daß** die Anzahl der dem zweiten Basisstationscontroller (RNC) zugewiesenen Kanäle zyklisch dem Verkehrsaufkommen angepaßt wird.

3. Verfahren nach einem der vorherigen Ansprüche, **dadurch gekennzeichnet, daß** die Funkschnittstelle auf einer TDMAbasierten Übertragung beruht und ein weiterer Teil der Kanäle für einen begrenzten Gebrauch durch den ersten Basisstationscontroller (RNC) reserviert ist, der nur nach vorherigen Kanalmessungen benutzt werden kann.

4. Verfahren nach Anspruch 3, **dadurch gekennzeichnet, daß** innerhalb des Versorgungsbereiches eines Basisstationscontrollers (RNC) den unterschiedlichen Basisstationen (BS) möglichst orthogonale Ressourcen zugeordnet werden.

5. Verfahren nach einem der Ansprüche 1 oder 2, **dadurch gekennzeichnet, daß** die Funkschnittstelle auf einer FDD-Übertragung basiert und die dem zweiten Basisstationscontroller (RNC) zugewiesenen Kanäle zu Durchführung eines Soft Handover benutzt werden.

6. Verfahren nach einem der vorherigen Ansprüche, **dadurch gekennzeichnet, daß** die Zuteilung der Kanäle von Zeitschlitz zu Zeitschlitz dynamisch angepaßt wird.

7. Verfahren nach einem der vorherigen Ansprüche, **dadurch gekennzeichnet, daß** für jede Teilnehmerstation (MS) nur eine Instanz der Ressourcenkontrolle (MAC-d) im Basisstationscontroller (RNC) eingerichtet wird.

8. Verfahren nach Anspruch 7, **dadurch gekennzeichnet, daß** im Basisstationscontroller (RNC) die teilnehmerbezogenen Instanzen (MAC-d) der einzelnen Teilnehmerstationen (MS) wechselwirken.

9. Verfahren nach einem der Ansprüche 7 oder 8, **dadurch gekennzeichnet, daß** den Teilnehmerstationen (MS) Prioritäten zugeordnet sind, und für einen Kanal, der mehreren Teilnehmerstationen (MS) zugeteilt ist, die Priorität über die Nutzung des Kanals entscheidet.

10. Verfahren nach Anspruch 9, **dadurch gekennzeichnet, daß** bei gleicher Priorität eine dynamische Priorisierung oder eine zeitliche Reihenfolge einer Ressourcenanforderung über die Nutzung des Kanals entscheidet.

11. Verfahren nach einem der vorherigen Ansprüche, **dadurch gekennzeichnet, daß** eine Ressourcentabelle (SCT) angelegt wird, die für die Kanäle angibt, welchen Teilnehmerstationen (MS) mit welcher Priorität der Kanal zugeteilt wird und welche Teilnehmerstation (MS) den Kanal aktuell nutzt.

12. Verfahren nach Anspruch 7 und 11, **dadurch gekennzeichnet, daß** die Ressourcentabelle (SCT) funkzellenspezifisch ist und eine Instanz Kanäle bei den Ressourcentabellen (SCT) der Funkzellen anfordert, die an der Verbindung beteiligt sind.

13. Verfahren nach einem der vorherigen Ansprüche, **dadurch gekennzeichnet, daß** nur dann eine Übergabe der Steuerung einer Verbindung zu einer Teilnehmerstation (MS) an einen weiteren Basisstationscontroller (RNC) eingeleitet wird, wenn vom bisher zuständigen Basisstationscontroller (RNC) keine Kanäle in der nötigen Funkzelle zugeordnet werden können.

14. Funk-Kommunikationssystem mit Basisstationen (BS) und Teilnehmerstationen (MS), die über eine Funkschnittstelle miteinander verbunden sind,
- wobei Ressourcen der Funkschnittstelle durch Kanäle gebildet werden,
- wobei durch die Basisstationen (BS) jeweils eine begrenzte Anzahl von Kanälen zur Verfügung stellbar sind, die Verbindungen von oder zu unterschiedlichen Teilnehmerstationen (BS) zuordenbar sind,
mit einem ersten und einem zweiten Basisstationscontroller (RNC), die jeweils mit Mitteln ausgestattet sind, um jeweils mehrere der Basisstationen (BS) bezüglich der Ressourcenzuteilung zu steuern und demselben Funknetz angehören,
**gekennzeichnet durch**
den Basisstationscontrollern (RNC) zugeordneten Steuereinrichtungen (RRC) mit Mitteln, um einen Teil der Kanäle einer dem ersten Basisstationscontroller zugeordneten Basisstation (BS) für eine Kanalzuteilung an Teilnehmerstationen **durch** den zweiten Basisstationscontroller (RNC) zu reservieren, so daß der zweite Basisstationscontroller (RNC) über die Zuteilung der Kanäle zu Teilnehmerstationen (MS) ohne eine Kommunikation mit dem ersten Basisstationscontroller befinden kann.

## Claims

1. Method for resource allocation in a radio communications system, in which
the resources are formed by channels in the radio interface between base stations (BS) and subscriber stations (MS),
with regard to resource allocation, a number of base stations (BS) which are controlled by a first and a second base station controller (RNC), which belong to the same radio network,
the base stations (BS) each provide a limited number of channels which can be allocated to connections from or to different subscriber stations (BS),
**characterized**
**in that** some of the channels which can be provided by one of the base stations (BS) are used for monitoring the first base station controller (RNC) associated with them, and are reserved for channel allocation to subscriber stations by the second base station controller, so that the second base station controller can provide these particular channels without communication with the first base station controller.

2. Method according to claim 1, **characterized in that** the number of channels which are assigned to the second base station controller (RNC) is matched cyclically to the traffic volume.

3. Method according to one of the preceding claims, **characterized in that** the radio interface uses TDMA-based transmission, and further particular channels are reserved for limited use by the first base station controller (RNC), which can be used only after prior channel measurements.

4. Method according to claim 3, **characterized in that** resources which are as orthogonal as possible are allocated to the various base stations (BS) within the supply area of a base station controller (RNC).

5. Method according to one of claims 1 or 2, **characterized in that** the radio interface is based on FDD transmission, and the channels which are assigned to the second base station controller (RNC) are used for carrying out a soft handover.

6. Method according to one of the preceding claims, **characterized in that** the allocation of the channels is adapted dynamically from timeslot to timeslot.

7. Method according to one of the preceding claims, **characterized in that** only one entity for resource monitoring (MAC-d) is set up in the base station controller (RNC) for each subscriber station (MS).

8. Method according to claim 7, **characterized in that** the subscriber-related entities (MAC-d) of the individual subscriber stations (MS) interact in the base station controller (RNC).

9. Method according to one of claims 7 or 8, **characterized in that** the subscriber stations (MS) are allocated priorities, and for a channel which is allocated to a number of subscriber stations (MS), the priority governs the use of the channel.

10. Method according to claim 9, **characterized in that**, when priorities are equal, dynamic prioritization or a time sequence of a resource request governs the use of the channel.

11. Method according to one of the preceding claims, **characterized in that** a resource table (SCT) is set up, which indicates for the channels which priority is allocated to which subscriber stations (MS) for that channel, and which subscriber station (MS) is currently using that channel.

12. Method according to claims 7 and 11, **characterized in that** the resource table (SCT) is radio-cell-specific, and an entity requests channels from the resource tables (SCT) for the radio cells which are involved in the connection.

13. Method according to one of the preceding claims, **characterized in that** a process of handing over control of a connection to a subscriber station (MS) to a further base station controller (RNC) is initiated only when the previously responsible base station controller (RNC) cannot allocate any channels in the necessary radio cell.

14. Radio communications system,
having base stations (BS) and subscriber stations (MS) which are connected to one another via a radio interface,
- in which case resources for the radio interface are formed by channels,
- in which case the base stations (BS) can each provide a limited number of channels, which can be allocated to connections from or to different subscriber stations (BS),
having a first and a second base station controller (RNC) which are each equipped with means in order to each control the resource allocation for a number of base stations (BS), and belong to the same radio network,
**characterized by**
control devices (RRC) which are allocated to the base station controllers (RNC) with means to reserve some of the channels of a base station (BS), which is allocated to the first base station controller, for channel allocation to subscriber stations by the second base station controller (RNC), such that the second base station controller (RNC) can decide on the allocation of the channels to subscriber stations (MS) without any communication with the first base station controller.

## Revendications

1. Procédé d'allocation de ressources dans un système de radiocommunication, dans lequel
- les ressources sont constituées par des canaux de l'interface radio entre des stations de base (BS) et des stations d'usagers (MS),
- respectivement plusieurs stations de base (BS) sont commandées, pour ce qui est de l'allocation de ressources, par un premier et un deuxième contrôleurs de stations de base (RNC) qui font partie du même réseau radio,
- peuvent être mis à disposition, par les stations de base (BS), respectivement un nombre limité de canaux qui sont affectables à des liaisons venant de ou allant vers différentes stations d'usagers (BS),
**caractérisé en ce qu'**une partie des canaux pouvant être mis à disposition par l'une des stations de base (BS) se soustrait au contrôle du premier contrôleur de stations de base (RNC) qui lui est affecté et est réservée pour une allocation de canaux à des stations d'usagers par le deuxième contrôleur de stations de base de sorte que le deuxième contrôleur de stations de base peut disposer de cette partie des canaux sans communication avec le premier contrôleur de stations de base.

2. Procédé selon la revendication 1, **caractérisé en ce que** le nombre des canaux alloués au deuxième contrôleur de stations de base (RNC) est adapté cycliquement au volume du trafic.

3. Procédé selon l'une des revendications précédentes, **caractérisé en ce que** l'interface radio repose sur une transmission basée sur le TDMA et une autre partie des canaux est réservée pour un usage limité par le premier contrôleur de stations de base (RNC) qui ne peut être utilisé que suite à des mesures de canal préalables.

4. Procédé selon la revendication 3, **caractérisé en ce que** des ressources aussi orthogonales que possible sont affectées aux différentes stations de base (BS) au sein de la zone de desserte d'un contrôleur de stations de base (RNC).

5. Procédé selon l'une des revendications 1 ou 2, **caractérisé en ce que** l'interface radio est basée sur une transmission FDD et les canaux alloués au deuxième contrôleur de stations de base (RNC) sont utilisés pour effectuer un transfert souple (Soft Handover).

6. Procédé selon l'une des revendications précédentes, **caractérisé en ce que** l'allocation des canaux est adaptée dynamiquement de créneau temporel en créneau temporel.

7. Procédé selon l'une des revendications précédentes, **caractérisé en ce qu'**est seulement créée, pour chaque station d'usager (MS), une instance du contrôle des ressources (MAC-d) dans le contrôleur de stations de base (RNC).

8. Procédé selon la revendication 7, **caractérisé en ce que**, dans le contrôleur de stations de base (RNC), les instances (MAC-d) des différentes stations d'usagers (MS) relatives aux usagers interagissent.

9. Procédé selon l'une des revendications 7 ou 8, **caractérisé en ce que** des priorités sont affectées aux stations d'usagers (MS) et, pour un canal qui est alloué à plusieurs stations d'usagers (MS), la priorité décide de l'utilisation du canal.

10. Procédé selon la revendication 9, **caractérisé en ce que**, étant donné une même priorité, une priorisation dynamique ou un ordre temporel d'une requête de ressources décide de l'utilisation du canal.

11. Procédé selon l'une des revendications précédentes, **caractérisé en ce qu'**est créée une table de ressources (SCT) qui indique, pour les canaux, à quelles stations d'usagers (MS) le canal est alloué avec quelle priorité et quelle station d'usager (MS) utilise actuellement le canal.

12. Procédé selon la revendication 7 et 11, **caractérisé en ce que** la table de ressources (SCT) est spécifique aux cellules radio et une instance demande des canaux aux tables de ressources (SCT) des cellules radio qui participent à la liaison.

13. Procédé selon l'une des revendications précédentes, **caractérisé en ce qu'**un transfert de la commande d'une liaison vers une station d'usager (MS) à un autre contrôleur de stations de base (RNC) n'est initialisé que si, dans la cellule radio requise, aucun canal n'a pu être affecté par le contrôleur de stations de base (RNC) compétent jusqu'à présent.

14. Système de radiocommunication
avec des stations de base (BS) et des stations d'usagers (MS) qui sont interconnectées via une interface radio,
- des ressources de l'interface radio étant constituées par des canaux,
- respectivement un nombre limité de canaux qui sont affectables à des liaisons venant de ou allant vers différentes stations d'usagers (BS) pouvant être mis à disposition par les stations de base (BS),
avec un premier et un deuxième contrôleurs de stations de base (RNC) qui sont chacun équipés de moyens pour commander respectivement plusieurs des stations de base (BS) pour ce qui est de l'allocation de ressources et qui font partie du même réseau radio,
**caractérisé par**
des dispositifs de commande (RRC) affectés aux contrôleurs de stations de base (RNC) et comprenant des moyens pour réserver une partie des canaux d'une station de base (BS) affectée au premier contrôleur de stations de base pour une allocation de canaux à des stations d'usagers par le deuxième contrôleur de stations de base (RNC) de sorte que le deuxième contrôleur de stations de base (RNC) peut décider de l'allocation des canaux à des stations d'usagers (MS) sans communication avec le premier contrôleur de stations de base.
